# EUROPEAN PATENT SPECIFICATION

(11) **EP 1 122 482 B1**
(45) Date of publication and mention of the grant of the patent: **01.03.2006**
(21) Application number: 01100439.7
(22) Date of filing: 08.01.2001
(51) Int. Cl.: F16L 11/22

(54) **Reinforced flexible hose for fluids**
Verstärkter Schlauch für Fluide
Tuyau flexible renforcé pour fluides

(30) Priority: 03.02.2000 IT MI000063 U
(43) Date of publication of application: 08.08.2001
(73) Proprietor: Tamborini, Ariberto, 21020 Daverio (Varese) (IT); Tamborini, Giancarlo, 21020 Daverio (Varese) (IT)
(72) Inventor: Tamborini, Ariberto, 21020 Daverio (Varese) (IT); Tamborini, Giancarlo, 21020 Daverio (Varese) (IT)
(74) Representative: Cicogna, Franco

(56) References cited:
- EP-A- 0 558 460
- US-A- 3 715 454
- US-A- 4 620 569
- US-A- 4 698 890
- US-A- 6 004 639

## Description

### BACKGROUND OF THE INVENTION

The present invention relates to a reinforced flexible hose construction for conveying fluids in general therethrough.

As is known, in a lot of applications it is necessary to convey fluids such as air or liquids, and, to that end, it is necessary to use a hose or tube which, in addition to being suitable to resist against possible pressure forces, has a very small weight and can be easily handled.

Prior hoses or tubes for the above intended applications, as at present available, however, have a comparatively high weight and poor handling characteristics.

The above drawbacks do not allow great length tubular element to be used and, moreover, prior hoses have poor flexure resistance properties.

Document EP-A-0 558 460 discloses a reinforced flexible hose construction with the features of the preamble of claim 1.

### SUMMARY OF THE INVENTION

Accordingly, the aim of the present invention is to overcome the above mentioned drawbacks, by providing a reinforced flexible hose or tube construction for conveying fluids in general therethrough, which comprises a main tubular element of small weight, therewith an auxiliary tubular element is firmly associated.

Within the scope of the above mentioned aim, a main object of the invention is to provide such a flexible hose which can be easily used in those applications in which a fluid must be sucked and in which a drive element must be easily available.

Another object of the present invention is to provide such a flexible hose construction which has a high pressure mechanical strength, jointly with a capability of being easily deformed without assuming permanent strained patterns.

Another object of the present invention is to provide such a flexible hose construction which is very reliable and safe in operation.

Yet another object of the present invention is to provide such a reinforced flexible hose construction which can be easily made starting from easily available elements and materials and which, moreover, is very competitive from a mere economic standpoint.

According to one aspect of the present invention, the above mentioned aim and objects, as well as yet other objects, which will become more apparent hereinafter, are achieved by a reinforced flexible hose construction for conveying fluids in general therethrough, wherein said flexible hose construction comprises a main tubular elements having a reinforcement coil,
at least an auxiliary tubular element firmly connected to said main tubular element by an outer coating sheath, said auxiliary outer tubular element extends through the overall length of said mean tubular element, characterized in that said auxiliary outer tubular element projects from the two ends of said main tubular element, that said reinforcement coil is made of a nylon 6.6 material, that said reinforcement coil is provided with a PVC or polyurethane copolymer inner sheath, and that said outer sheath is also made of the same PVC or same polyurethane copolymer.

### BRIEF DESCRIPTION OF THE DRAWINGS

Further characteristics and advantages of the present invention will become more apparent hereinafter from the following detailed disclosure of a reinforced flexible hose or tube construction for conveying fluids in general threrethrough, which is illustrated, by way of an indicative, but not limitative, example, in the accompanying drawings, where:
Figure 1 is a perspective view, as partially broken away, illustrating the flexible hose or tube according to the present invention;
Figure 2 is a further partially broken away view illustrating the flexible hose according to the invention;
Figure 3 is a cross sectional view of the flexible hose;
Figure 4 is a perspective view illustrating a portion of the flexible hose;
   and
Figure 5 is a further perspective view illustrating a possible application of the invention.

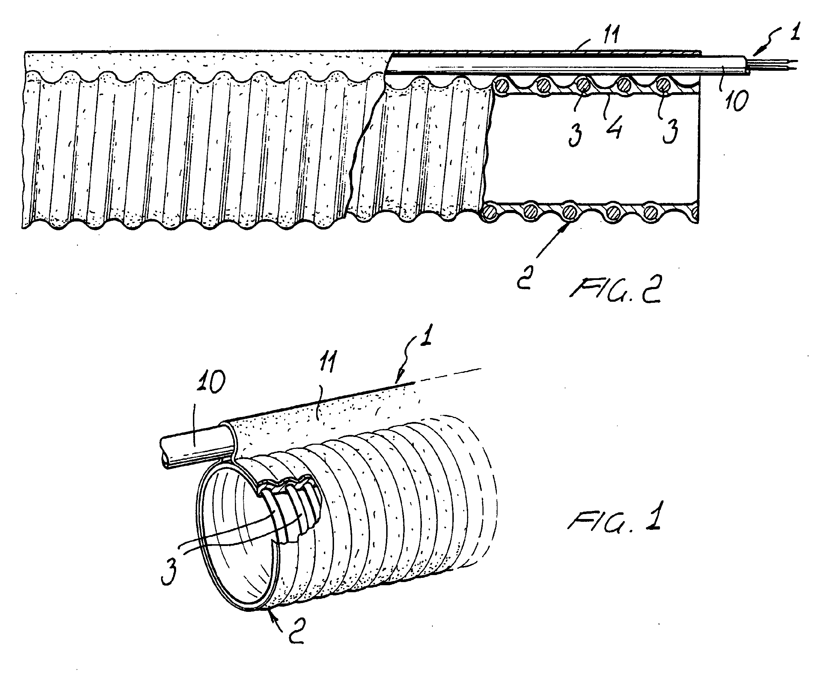

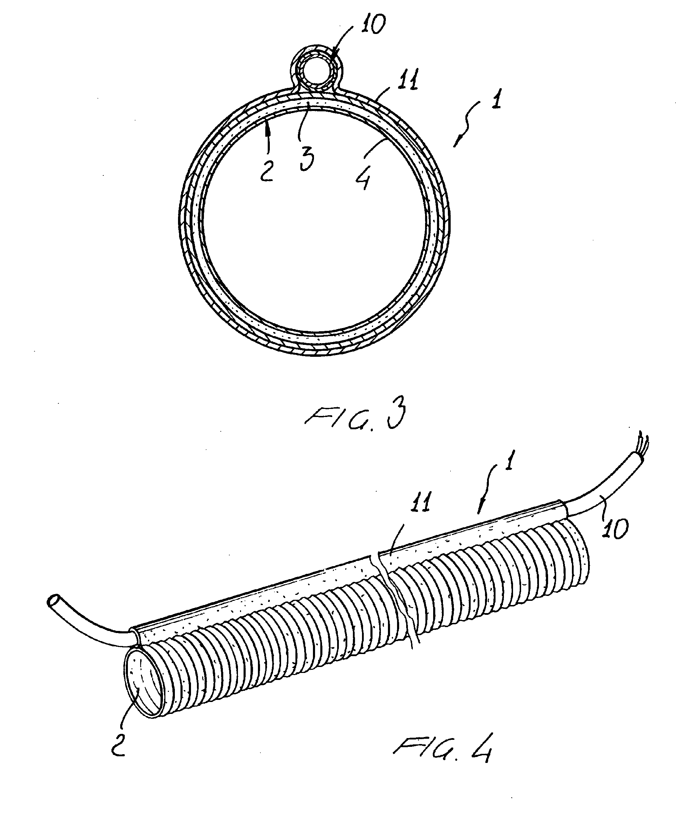

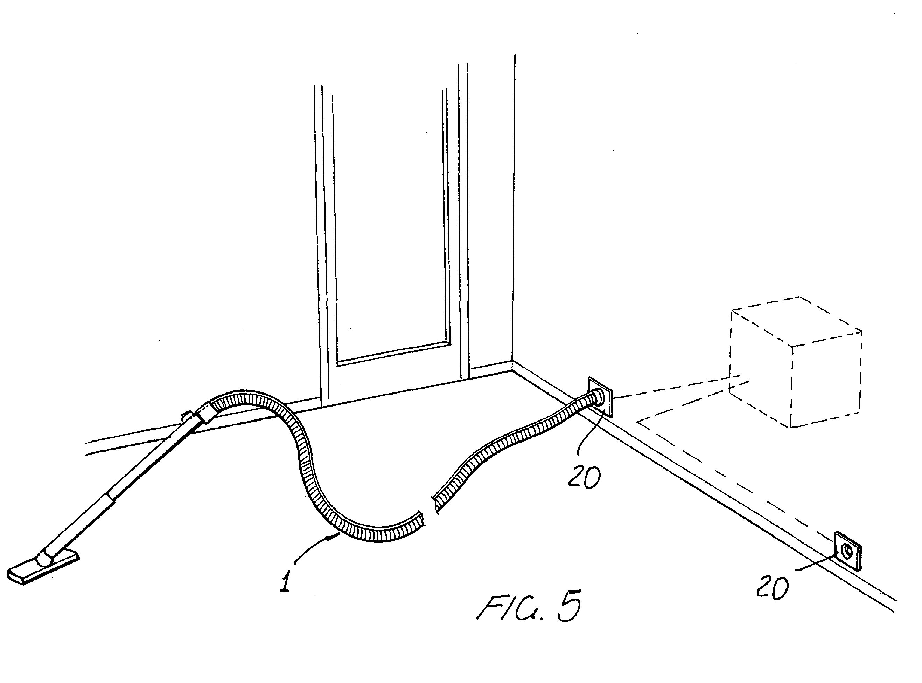

### DESCRIPTION OF THE PREFERRED EMBODIMENT

With reference to the number references of the above mentioned figures, the reinforced flexible hose construction for conveying fluids in general therethrough, which has been generally indicated by the reference number 1, comprises a main tubular element 2, in the inside of which a reinforcement element is provided, said reinforcement element including a coil 3 made of a plastic material such as nylon 6.6 or any other like materials.

More specifically, the reinforcement coil 3 is provided with an inner sheath 4 made of polyvinylchloride or copolymeric materials obtained from polyvinylchloride and polyurethane.

Adjoining the main tubular element 2 at least an auxiliary tubular element generally indicated by the reference number 10, and made of PVC or copolymers added to polyurethane is provided. Said auxiliary tubular element is firmly connected to the main tubular element by an outer coating or encompassing sheath 11, made of the same material as the inner sheath 4, i.e. a polyvinylchloride material or polyvinylchloride and polyurethane material.

With the disclosed arrangement, and, in particular, owing to the provision of the reinforcement coil made of nylon 6.6 or like materials, a flexible hose of low weight and high handling characteristics is obtained.

Owing to its mentioned characteristics, it is particularly suitable for industrial and domestic applications, in which fluids must be sucked, for example by coupling said hose to suction outlets 20, which can be provided in room, to provide a suction pipe.

The small weight, together with the high mechanical strength and good flexibility properties of the subject hose, allow to make the hose with a comparatively long length, without hindering the handling and use capabilities of the hose itself.

Moreover, the provision of at least an auxiliary tubular element, allows to provide one or more ducts for the passage therethrough of electric, hydraulic or pneumatic driving fluids, which do not hinder the users in applications.

In practicing the invention, the used materials, though the best results have been obtained by using the indicated materials, as well as the contingent size and shapes can be any, depending on requirements.

## Claims

1. A reinforced flexible hose construction (1) for conveying fluids in general therethrough, said flexible hose construction (1) comprising a main tubular element (2) including a reinforcement coil (3) therein and adjoining said main tubular element (2), at least an auxiliary outer tubular element (10) firmly connected to said main tubular element through an outer sheath (11), said auxiliary outer tubular element extends through the overall length of said main tubular element (2), **characterized in that** said auxiliary outer tubular element projects from the two ends of said main tubular element, that said reinforcement coil is made of a nylon 6.6 material, that said reinforcement coil is provided with a PVC or polyurethane copolymer inner sheath (4), and that said outer sheath (11) is also made of the same PVC or the same polyurethane copolymer.

2. A flexible hose construction, according to Claim 1, **characterized in that** said flexible hose construction (1) comprises two or more said auxiliary tubular elements (10), firmly connected to said main tubular element (2) through said outer sheath (11).

## Patentansprüche

1. Verstärkte Schlauchkonstruktion (1) zum Durchleiten von Fluiden im allgemeinen, wobei die flexible Schlauchkonstruktion (1) ein röhrenförmiges Hauptelement (2), welches eine Verstärkungsspule (3) darin beinhaltet, und an das röhrenförmige Hauptelement (2) angrenzend zumindest ein äußeres, röhrenförmiges Zusatzelement (10) umfaßt, das über eine Außenhülle (11) fest mit dem röhrenförmigen Hauptelement verbunden ist, wobei sich das äußere, röhrenförmige Zusatzelement über die Gesamtlänge des röhrenförmigen Hauptelements (2) erstreckt, **dadurch gekennzeichnet, daß** das äußere, röhrenförmige Zusatzelement von den zwei Enden des röhrenförmigen Hauptelements vorsteht, daß die Verstärkungsspule aus einem Nylon 6.6-Material hergestellt ist, daß die Verstärkungsspule mit einer Innenhülle (4) aus PVC- oder Polyurethancopolymer versehen ist und daß die Außenhülle (11) ebenfalls aus demselben PVC- oder demselben Polyurethancopolymer hergestellt ist.

2. Schlauchkonstruktion nach Anspruch 1, **dadurch gekennzeichnet, daß** die Schlauchkonstruktion (1) zwei oder mehr der röhrenförmigen Zusatzelemente (10) umfaßt, die über die Außenhülle (11) fest mit dem röhrenförmigen Hauptelement (2) verbunden sind.

## Revendications

1. Construction de type tuyau flexible renforcé (1) pour y transporter des fluides en général, ladite construction de type tuyau (1) comprenant un élément tubulaire principal (2) comportant une bande de renfort (3) et, avoisinant ledit élément tubulaire principal (2), au moins un élément tubulaire externe auxiliaire (10) fermement connecté audit élément tubulaire principal par une gaine (11), ledit élément tubulaire externe auxiliaire s'étend sur toute la longueur dudit élément tubulaire principal (2), **caractérisée en ce que** ledit élément tubulaire externe auxiliaire dépasse des deux extrémités dudit élément tubulaire principal, **en ce que** ladite bande de renfort est fabriquée en matériau de nylon 6.6, **en ce que** ladite bande de renfort est munie d'une gaine interne (4) de copolymère de polyuréthane ou PVC, et **en ce que** ladite gaine externe (11) est également fabriquée dans le même copolymère de polyuréthane ou PVC.

2. Construction de type tuyau flexible, selon la revendication 1, **caractérisée en ce que** ladite construction de type tuyau flexible (1) comprend deux ou plus éléments tubulaires flexibles (10), fermement connectés audit élément tubulaire (2) par ladite gaine (11).
